# FASCICULE DE BREVET EUROPEEN

(11) **EP 1 716 910 B1**
(45) Date de publication et mention de la délivrance du brevet: **04.08.2010**
(21) Numéro de dépôt: 06356034.6
(22) Date de dépôt: 29.03.2006
(51) Int. Cl.: B01D 53/50, B01D 53/68

(54) **Procédé et installation d'épuration de fumées contenant des polluants acides**
Verfahren und Anlage zur Reinigung von saure Verungreinigungen enthaltenden Rauchgasen
Method and plant for purifying flue gas containing acidic pollutants

(30) Priorité: 30.03.2005 FR 0503078
(43) Date de publication de la demande: 02.11.2006
(73) Titulaire: LAB SA, 69006 Lyon (FR)
(72) Inventeur: Tabaries, Frank, 83190 Ollioules (FR); Siret, Bernard, 69008 Lyon (FR); Costa, Stefano, 69002 Lyon (FR)
(74) Mandataire: Schouller, Jean-Philippe

(56) Documents cités:
- EP-A- 0 182 706
- WO-A-00/04983
- WO-A-88/06484
- WO-A-93/02774

## Description

La présente invention concerne un procédé et une installation d'épuration de fumées contenant des polluants acides.

Au sens de l'invention, ces polluants acides comprennent notamment, mais non exclusivement, l'acide chlorhydrique et le dioxyde de soufre. Ces polluants sont générés par de nombreuses activités industrielles, telles que les incinérateurs, les fours cimentiers ou les raffineries de pétrole. En vue du traitement de ces polluants acides, plusieurs procédés sont connus et d'utilisation commerciale courante.

Tout d'abord, on trouve les procédés humides dans lesquels les gaz à épurer sont mis en contact avec un liquide de lavage qui, par absorption, capte les polluants acides et les neutralise. Plusieurs technologies sont disponibles depuis les laveurs utilisant une pulvérisation en pluie jusqu'aux laveurs à garnissage, en passant par les laveurs à plateaux. Si ces procédés sont efficaces et produisent comparativement peu de résidus solides, ils sont coûteux en termes d'investissement.

On trouve ensuite les procédés secs dans lesquels un réactif de neutralisation, usuellement la chaux ou le bicarbonate de sodium, est injecté dans le gaz à épurer. Le produit de la réaction, ainsi que l'excès de réactifs, sont alors collectés dans un filtre à manches ou dans un électrofiltre.

Ces procédés, moins lourds en investissement, souffrent cependant de coûts opératoires sensiblement plus élevés que ceux des procédés humides. En effet, un excès de réactif est nécessaire à une épuration poussée, ce qui induit des coûts substantiels liés à ce réactif, et surtout au traitement et à la mise en décharge des résidus solides.

On a cherché à améliorer cette situation avec les procédés semi-secs dans lesquels le réactif est mis en contact avec les gaz à épurer, non pas sous forme solide, mais sous forme d'un liquide ou d'une bouillie, usuellement un lait de chaux. Au contact des gaz chauds l'eau s'évapore, laissant au final un résidu solide d'une composition similaire à celui des procédés secs, qui est collecté sur un filtre ou un électrofiltre.

Cette solution représente un progrès par rapport aux systèmes secs car l'existence temporaire d'une phase humide permet de réduire l'excès nécessaire de réactif. La quantité consommée de réactifs est moindre, tout comme la quantité de résidus produits. En revanche, l'installation correspondante est complexe, puisqu'elle inclut nécessairement un réacteur d'atomisation / évaporation.

On a également cherché à diminuer la quantité de réactifs et de résidus produits dans les systèmes secs en humidifiant au préalable le réactif, par exemple en pulvérisant de l'eau sur la chaux, dans une vis ou un tambour, avant de la mettre en contact avec les gaz chauds. On réalise donc à moindres frais une sorte de procédé semi-sec qui tire parti de l'humidification en surface du réactif, ce qui conduit à une activation de ce dernier.

Cette solution décrite notamment dans FR-A-2 572 951, implique cependant certains inconvénients. En effet, elle s'accompagne d'un risque de bouchage, ou mottage, des unités de transport des réactifs, qui est d'autant plus important que la concentration en acide chlorhydrique dans les fumées est élevée.

Ceci étant précisé, l'invention vise à remédier aux différents inconvénients de l'art antérieur évoqués ci-dessus.

Elle vise en particulier à proposer un procédé qui, tout en assurant une activation satisfaisante du réactif de neutralisation, permet de s'affranchir du problème de bouchage évoqué ci-dessus.

Elle vise également à proposer un tel procédé, qui est avantageux en termes économiques.

A cet effet, elle a pour objet un procédé d'épuration de fumées contenant des polluants acides, qui comprennent l'acide chlorhydrique et/ou le dioxyde de soufre, caractérisé en ce qu'il comprend les étapes suivantes :
- on alimente les fumées à épurer, à une température comprise entre 120°C et 250°C, de préférence entre 140°C et 180°C, à un séparateur gaz-solides, auquel on alimente également un réactif de neutralisation, notamment de la chaux, de la magnésie, du carbonate de sodium ou du bicarbonate de sodium ;
- on collecte une fraction des fumées épurées, comprise entre 5 et 25 %, de préférence entre 5 et 10 %, du débit total de ces fumées épurées ;
- on admet cette fraction collectée dans un réacteur d'activation, à une température comprise entre 150°C et 300°C, de préférence entre 160°C et 230°C, ainsi qu'à une teneur en eau comprise entre 20 et 60 %, de préférence entre 30 et 50 %;
- on admet également une fraction des résidus solides issus du séparateur gaz-solides, dans ledit réacteur d'activation, de manière à activer ces résidus solides, qui comprennent du réactif de neutralisation, par l'intermédiaire de ladite fraction collectée des fumées épurées ; et
- on recycle au moins une partie des résidus solides activés dans le réacteur d'activation, ainsi qu'au moins une partie des gaz effluents de ce réacteur, vers le séparateur gaz-solides.

Selon d'autres caractéristiques de l'invention :
- on chauffe la fraction collectée desdites fumées épurées avant de l'admettre dans le réacteur d'activation, en particulier dans un brûleur ;
- on humidifie la fraction collectée des fumées avant de l'admettre dans le réacteur d'activation, en particulier par pulvérisation d'eau ou par injection de vapeur vive ;
- on réalise un lit fluidisé, ou un lit jaillissant, de ladite fraction des résidus solides, dans le réacteur d'activation ;
- on utilise des moyens de séparation, prévus en aval du réacteur d'activation, notamment un cyclone, de manière à renvoyer une partie des résidus solides activés vers ce réacteur.

L'invention a également pour objet une installation pour la mise en oeuvre du procédé tel que défini ci-dessus, comprenant :
- des moyens d'alimentation des fumées à épurer ;
- un séparateur gaz-solides, dans lequel débouchent les moyens d'alimentation en fumées à épurer ;
- des moyens d'admission d'un réactif de neutralisation, débouchant dans le séparateur ;
- des moyens de collecte d'une fraction des fumées épurées ;
- des moyens d'admission d'une fraction des résidus solides issus du séparateur ;
- un réacteur d'activation, dans lequel débouchent les moyens de collecte de la fraction des fumées épurées, ainsi que les moyens d'admission de la fraction des résidus solides ; et
- des moyens de recyclage d'au moins une partie des résidus solides activés dans le réacteur d'activation, ainsi que d'au moins une partie des gaz effluents de ce réacteur, ces moyens de recyclage étant mis en communication avec le séparateur gaz-solides.

Selon d'autres caractéristiques de l'invention :
- le séparateur gaz-solides est du type filtre à manches ;
- l'installation comporte également des moyens de chauffage, notamment un brûleur, dans lesquels débouchent les moyens de collecte, ces moyens de chauffage étant disposés en amont du réacteur d'activation ;
- cette installation comporte également des moyens d'humidification, dans lesquels débouchent les moyens de collecte, ces moyens d'humidification étant prévus en amont du réacteur d'activation ;
- les moyens de recyclage débouchent dans des moyens de séparation, notamment un cyclone, propres à renvoyer vers le réacteur d'activation, une partie des résidus solides activés préalablement dans ce réacteur.

L'invention va être décrite ci-dessous, en référence à la figure unique annexée, donnée uniquement à titre d'exemple non limitatif, qui est une représentation schématique d'une installation d'épuration de fumées conforme à l'invention.

Un dispositif d'épuration des gaz 101, d'une technologie connue en soi et pouvant être par exemple de type filtre à manches, reçoit les fumées à épurer 1 à une température comprise entre 120°C et 250°C, et de préférence entre 140°C et 180°C, ainsi qu'un apport de réactif frais 2 et un produit activé 12 provenant d'un réacteur d'activation 104. Ce réactif 2, dit de neutralisation, est par exemple de la chaux, en particulier à grande surface spécifique, de la magnésie, du carbonate de sodium ou encore du bicarbonate de sodium.

Une partie 4 des fumées épurées 3 sortant de ce séparateur 101 est dirigée vers une unité 102 pouvant être par exemple un brûleur à gaz ou à fuel, ou bien une batterie de chauffe électrique. Cette fraction représente entre 5 et 25 % du débit total, et de préférence entre 5 et 10 %. On utilise pour ce faire, de manière optionnelle, un ventilateur non représenté et non objet de l'invention. La partie 5 des gaz non collectée est dirigée vers un traitement complémentaire ou bien vers une cheminée, non représentée.

Les gaz ainsi réchauffés dans l'unité 102, à une température comprise entre 160°C et 450°C, sont admis dans une chambre d'humidification 103, pouvant être en variante intégrée au réacteur d'activation 104. De l'eau ou bien de la vapeur d'eau 7 est introduite dans la chambre 103 en quantité telle que l'humidité absolue des gaz est portée à une valeur comprise entre 20 et 60 % en volume, l'humidité étant exprimée sur une base totale humide. Ainsi, à titre indicatif, 40 % d'humidité signifient que 100 volumes de fumées comprennent 40 volumes d'eau sous forme vapeur, ainsi que 60 volumes d'autres gaz, par exemple de N₂, de CO₂, d'O₂ et de traces de polluants acides. Les gaz ainsi réchauffés et humidifiés sont alors introduits dans le réacteur 104.

Une partie 10 des résidus solides 9 issus du séparateur 101, qui contiennent encore une fraction de réactif non utilisé, est dirigée vers le réacteur d'activation 104, éventuellement par le biais de vis et de capacités intermédiaires non représentées et non objets de l'invention. La partie 11 des résidus non recyclée est par ailleurs évacuée du système.

Dans le réacteur 104, les résidus solides 10, contenant du réactif de neutralisation, sont soumis à une opération d'activation, mettant en oeuvre des rééquilibrages de nature chimique, thermochimique ou thermodynamique. En effet, il est connu de l'état de la technique que l'humidification accroît l'activité apparente d'un tel réactif de neutralisation. De plus, les ions chlorure et le chlorure de calcium augmentent cette activité apparente, en particulier à l'égard du dioxyde de soufre. Les réactions d'équilibrage, telles que CaCl₂ + Ca (OH)₂ ⇄ 2 Ca OH Cl sont notamment favorisées par la présence d'eau.

La fraction des gaz épurés, collectée par le flux 4 puis chauffée et humidifiée, est admise dans le réacteur 104 à une température comprise entre 150°C et 300°C. On notera, à cet égard, que la température dans le réacteur 104 peut être réglée par mise en oeuvre plus ou moins poussée de l'unité 102. En d'autres termes, on ajuste la température du flux 6, sortant de l'unité 102, de façon à obtenir la température souhaitée dans le réacteur 104. Bien évidemment, la température de consigne à obtenir en sortie de l'unité 102 est également fonction de l'humidité des flux 6 et 8, ainsi que du choix fait pour le flux 7, selon que l'on utilise de la vapeur d'eau ou de l'eau liquide. Par ailleurs, comme on l'a vu ci-dessus, le flux 8 est admis dans le réacteur 104 à une teneur en eau comprise entre 20 et 60 %.

On notera que le flux gazeux 8 sert de gaz vecteur, en vue de l'activation des solides dans le réacteur 104. Par ailleurs, dans le cas où le réacteur est de type à lit fluidisé ou à lit jaillissant, ce flux gazeux sert à fluidiser, au moins partiellement, les solides 10 admis dans ce réacteur 104. En ce qui concerne les lits jaillissants, ou « spouted beds », on se reportera à la publication « Pressure Fluctuation in Jet Spouted Beds » parue en octobre 2004, dans le volume 82 de « The Canadian Journal of Chemical Engineering ».

Le flux 12 sortant de ce réacteur 104, qui comprend des fumées préalablement épurées et des résidus solides activés, est retourné en amont du séparateur 101. Ces résidus solides ainsi activés, qui comprennent notamment du réactif de neutralisation, forment avec le réactif frais 2 l'ensemble du réactif qui va servir à la captation des polluants acides par le séparateur 101.

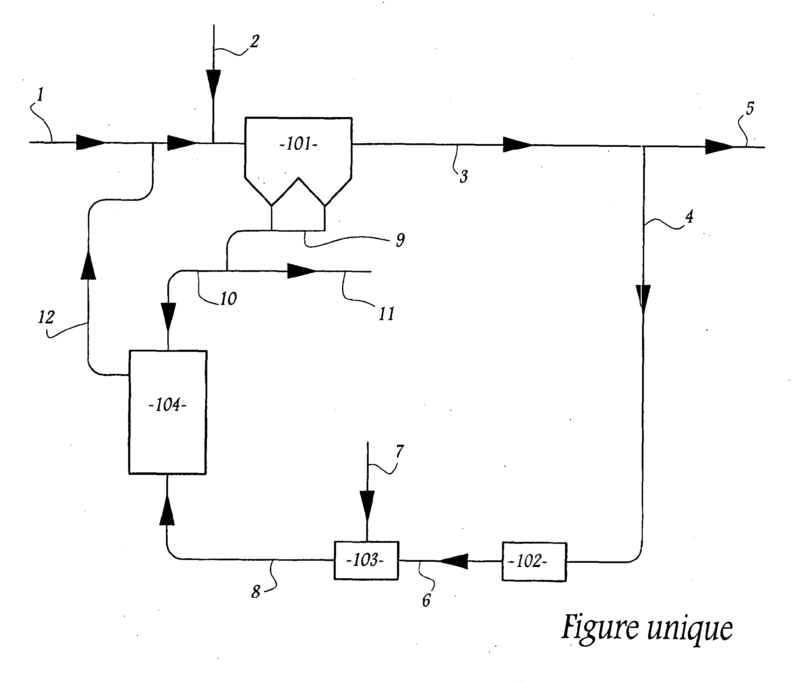

De manière optionnelle, non représentée sur la figure 1, seulement une partie du flux 12 est retournée au filtre, tandis que l'autre partie, par exemple constituée des plus grosses particules, les moins réactives, est renvoyée vers le réacteur 104 par un dispositif de classification /séparation, par exemple de nature cyclonique. Ainsi, une partie des solides activés est avantageusement recyclée vers ce réacteur 104.

L'invention permet de réaliser les objectifs précédemment mentionnés.

En effet, l'invention autorise une activation satisfaisante des résidus solides 9, comprenant du réactif de neutralisation, grâce à l'utilisation de la fraction collectée des fumées épurées. Par ailleurs, l'invention est avantageuse en termes économiques, étant donné qu'on tire parti du flux gazeux pré-existant, formé par les fumées épurées.

Enfin, l'invention permet de s'affranchir des phénomènes de bouchage, rencontrés dans l'art antérieur. En effet, la température régnant dans le réacteur d'activation 104 est suffisamment élevée, pour éviter sensiblement ce genre de phénomène. De plus, l'utilisation d'un lit fluidisé ou d'un lit jaillissant, dans le réacteur d'activation, contribue à réduire encore tout risque de bouchage.

L'invention peut être mieux comprise à l'aide de l'exemple suivant :
55000 Nm³/h de fumées d'une installation de combustion, à 150°C, soit environ 69750 kg/h (contenant 14 % H₂O), sont mélangées aux flux sortant du réacteur d'activation 104. Le mélange, à une température d'environ 152°C, est alimenté à un filtre à manche 101. 10 % des gaz effluents sont recirculés vers un brûleur à gaz qui élève la température de 152°C à 173°C. 1000 kg/h de vapeur vive à 6 bars et à 159°C sont alimentés en amont du réacteur d'activation 104, qui reçoit également 80 % des résidus collectés au filtre à manche. La température dans le réacteur d'activation s'établit à 170°C.

| | 1 (*) Fumées à épurer | 1bis (*) Gaz introduits au filtre (hors solides) | 4(*) Gaz recyclés pour activation | 5(*) Gaz épurés |
|---|---|---|---|---|
| Flux massique | 69750 Kg/h | 78610 kg/h | 7860 kg/h | 70750 kg/h |
| t | 150°C | 152°C | 152°C | 152°C |
| % H₂O | 14 % | 15.9 % | 15.9 % | 15.9 % |

| | 6(*) Sortie du brûleur | 7(*) Vapeur vive | 8(*) Gaz servant à l'activation | |
|---|---|---|---|---|
| Flux massique | 7860 kg/h | 1000 kg/h | 8860 kg/h | |
| t | 173°C | 159°C | 170°C | |
| % H₂O | 15.9 % | 100 % | 30 % | |

| | | | | |
|---|---|---|---|---|
| (*) Les numéros dans le tableau ci-dessus sont relatifs aux flux gazeux référencés sur la figure. La référence 1bis désigne la somme du flux 1 et de la fraction gazeuse du flux 12. | | | | |

## Revendications

1. Procédé d'épuration de fumées (1) contenant des polluants acides, qui comprennent l'acide chlorhydrique et/ou le dioxyde de soufre, **caractérisé en ce qu'**il comprend les étapes suivantes :
- on alimente les fumées à épurer (1), à une température comprise entre 120°C et 250°, de préférence entre 140°C et 180°C, à un séparateur gaz-solides (101), auquel on alimente également un réactif de neutralisation (2), notamment de la chaux, de la magnésie, du carbonate de sodium ou du bicarbonate de sodium ;
- on collecte une fraction (4) des fumées épurées (3), comprise entre 5 et 25 %, de préférence entre 5 et 10 %, du débit total de ces fumées épurées (3) ;
- on admet cette fraction collectée (4) dans un réacteur d'activation (104), à une température comprise entre 150°C et 300°C, de préférence entre 160°C et 230°C, ainsi qu'à une teneur en eau comprise entre 20 et 60 %, de préférence entre 30 et 50 % ;
- on admet également une fraction (10) des résidus solides (9) issus du séparateur gaz-solides (101), dans ledit réacteur d'activation (104), de manière à activer ces résidus solides, qui comprennent du réactif de neutralisation, par l'intermédiaire de ladite fraction collectée (4) des fumées épurées (3) ; et
- on recycle (par 12) au moins une partie des résidus solides activés dans le réacteur d'activation (104), ainsi qu'au moins une partie des gaz effluents de ce réacteur, vers le séparateur gaz-solides (101).

2. Procédé selon la revendication 1, **caractérisé en ce qu'**on chauffe la fraction collectée (4) desdites fumées épurées (3) avant de l'admettre dans le réacteur d'activation (104), en particulier dans un brûleur (102).

3. Procédé selon la revendication 1 ou 2, **caractérisé en ce qu'**on humidifie la fraction collectée (4) des fumées (3) avant de l'admettre dans le réacteur d'activation (104), en particulier par pulvérisation d'eau ou par injection de vapeur vive.

4. Procédé selon l'une des revendications précédentes, **caractérisé en ce qu'**on réalise un lit fluidisé, ou un lit jaillissant, de ladite fraction (10) des résidus solides (9), dans le réacteur d'activation (104).

5. Procédé selon l'une des revendications précédentes, **caractérisé en ce qu'**on utilise des moyens de séparation, prévus en aval du réacteur d'activation (104), notamment un cyclone, de manière à renvoyer une partie des résidus solides activés vers ce réacteur (104).

6. Installation d'épuration de fumées pour la mise en oeuvre du procédé conforme à l'une quelconque des revendications.précédentes, comprenait
- des moyens d'alimentation des fumées à épurer (1) ;
- un séparateur gaz-solides (101), dans lequel débouchent les moyens d'alimentation en fumées à épurer ;
- des moyens (2) d'admission d'un réactif de neutralisation, débouchant dans le séparateur (101) ;
- des moyens de collecte d'une fraction (4) des fumées épurées (3) ;
- des moyens d'admission d'une fraction (10) des résidus solides (9) issus du séparateur (101) ;
- un réacteur d'activation (104), dans lequel débouchent les moyens de collecte de la fraction (4) des fumées épurées, ainsi que les moyens d'admission de la fraction (10) des résidus solides ; et
- des moyens (12) de recyclage d'au moins une partie des résidus solides activés dans le réacteur d'activation (104), ainsi que d'au moins une partie des gaz effluents de ce réacteur, ces moyens de recyclage étant mis en communication avec le séparateur gaz-solides (101).

7. Installation d'épuration de fumées selon la revendication 6, **caractérisée en ce que** le séparateur gaz-solides (101) est du type filtre à manches.

8. Installation d'épuration de fumées selon la revendication 6 ou 7, **caractérisée en ce que** l'installation comporte également des moyens de chauffage (102), notamment un brûleur, dans lesquels débouchent les moyens de collecte, ces moyens de chauffage étant disposés en amont du réacteur d'activation (104).

9. Installation d'épuration de fumées selon l'une quelconque des revendications 6 à 8, **caractérisée en ce que** cette installation comporte également des moyens d'humidification (103), dans lesquels débouchent les moyens de collecte, ces moyens d'humidification étant prévus en amont du réacteur d'activation (104).

10. Installation d'épuration de fumées selon l'une quelconque des revendications 6 à 9, **caractérisée en ce que** les moyens de recyclage (12) débouchent dans des moyens de séparation, notamment un cyclone, propres à renvoyer vers le réacteur d'activation (104), une partie des résidus solides activés préalablement dans ce réacteur.

## Claims

1. Process for the purification of fumes (1) containing acidic pollutants which comprise hydrochloric acid and/or sulfur dioxide, **characterized in that** it comprises the following stages:
- the fumes (1) to be purified are fed at a temperature of between 120 °C and 250 °C, preferably between 140 °C and 180 °C, to a gas/solids separator (101), to which a neutralizing reagent (2) is also fed, in particular lime, magnesia, sodium carbonate or sodium bicarbonate;
- a fraction (4) of the purified fumes (3) of between 5 and 25 %, preferably between 5 and 10 % of the total amount of these purified fumes (3) is collected;
- this collected fraction (4) is let into an activation reactor (104) at a temperature of between 150 °C and 300 °C, preferably between 160 °C and 230 °C, as well as a water content of between 20 and 60 %, preferably between 30 and 50 %;
- a fraction (10) of the solid residues (9) from the gas/solids separator (101) is also let into the said activation reactor (104) in a manner such as to activate these solid residues, which comprise the neutralizing reagent, by means of the said collected fraction (4) of the purified fumes (3); and
- at least a part of the solid residues activated in the activation reactor (104), as well as at least a part of the effluent gases of this reactor, are recycled (via 12) to the gas/solids separator (101).

2. Process according to claim 1, **characterized in that** the collected fraction (4) of the said purified fumes (3) is heated, in particular in a burner (102), before being let into the activation reactor (104).

3. Process according to claim 1 or 2, **characterized in that** the collected fraction (4) of the fumes (3) is dampened, in particular by spraying with water or by injection of live steam, before being let into the activation reactor (104).

4. Process according to one of the preceding claims, **characterized in that** a fluidized bed, or a spray bed, of the said fraction (10) of the solid residues (9) is realized in the activation reactor (104).

5. Process according to one of the preceding claims, **characterized in that** separation means, in particular a cyclone, provided downstream of the activation reactor (104) are used in a manner such as to return a part of the activated solid residues to this reactor (104) .

6. Installation for the purification of fumes for carrying out the process according to any one of the preceding claims, comprising:
- means for feeding the fumes (1) to be purified;
- a gas/solids separator (101) into which the means for feeding fumes to be purified open;
- means (2) for letting in a neutralizing reagent, opening into the separator (101);
- means for collection of a fraction (4) of the purified fumes (3);
- means for letting in a fraction (10) of the solid residues (9) from the separator (101);
- an activation reactor (104) into which the means for collection of the fraction (4) of the purified fumes as well as the means for letting in the fraction (10) of the solid residues open; and
- means (12) for recycling at least a part of the solid residues activated in the activation reactor (104), as well as at least a part of the effluent gases of this reactor, these recycling means communicating with the gas/solids separator (101).

7. Installation for the purification of fumes according to claim 6, **characterized in that** the gas/solids separator (101) is of the bag filter type.

8. Installation for the purification of fumes according to claim 6 or 7, **characterized in that** the installation also comprises heating means (102), in particular a burner, into which the collection means open, these heating means being arranged upstream of the activation reactor (104).

9. Installation for the purification of fumes according to one of claims 6 to 8, **characterized in that** this installation also comprises dampening means (103) into which the collection means open, these dampening means being provided upstream of the activation reactor (104) .

10. Installation for the purification of fumes according to any one of claims 6 to 9, **characterized in that** the recycling means (12) open into the separation means, in particular a cyclone, suitable for returning to the activation reactor (104) a part of the solid residues activated beforehand in this reactor.

## Patentansprüche

1. Verfahren zum Reinigen von Rauchgasen (1), die saure Schadstoffe, umfassend Chlorwasserstoffsäure und/oder Schwefeldioxid, enthalten, **dadurch gekennzeichnet, dass** es die folgenden Schritte umfasst:
- Zuführen der zu reinigenden Rauchgase (1) bei einer Temperatur im Bereich zwischen 120 °C und 250 °C, bevorzugt zwischen 140 °C und 180 °C, in einen Gas-Feststoff-Separator (101), dem außerdem ein Neutralisierungsreagens (2), insbesondere Kalk, Magnesia, Natriumcarbonat oder Natriumbicarbonat zugeführt wird;
- Sammeln einer Fraktion (4) der gereinigten Rauchgase (3) im Bereich zwischen 5 und 25 %, bevorzugt zwischen 5 und 10 % der gesamten Durchflussmenge dieser gereinigten Rauchgase (3);
- Einspeisen dieser gesammelten Fraktion (4) in einen Aktivierungsreaktor (104) bei einer Temperatur im Bereich zwischen 150 °C und 300 °C, bevorzugt zwischen 160 °C und 230 °C, sowie bei einem Wassergehalt im Bereich zwischen 20 und 60 %, bevorzugt zwischen 30 und 50 %;
- außerdem Einspeisen einer Fraktion (10) der Feststoffrückstände (9), die aus dem Gas-Feststoff-Separator (101) stammen, in den Aktivierungsreaktor (104), um diese Feststoffrückstände, die Neutralisierungsreagens umfassen, mittels der gesammelten Fraktion (4) der gereinigten Rauchgase (3) zu aktivieren, und
- Recyceln (über 12) mindestens eines Teils der im Aktivierungsreaktor (104) aktivierten Feststoffrückstände sowie mindestens eines Teils der aus diesem Reaktor abfließenden Gase zum Gas-Feststoff-Separator (101).

2. Verfahren nach Anspruch 1, **dadurch gekennzeichnet, dass** die gesammelte Fraktion (4) der gereinigten Rauchgase (3) vor ihrer Einspeisung in den Aktivierungsreaktor (104), insbesondere in einen Brenner, (102) erhitzt wird.

3. Verfahren nach Anspruch 1 oder 2, **dadurch gekennzeichnet, dass** die gesammelte Fraktion (4) der Rauchgase (3) vor ihrer Einspeisung in den Aktivierungsreaktor (104) insbesondere durch Wasservernebelung oder durch Injektion von Frischdampf befeuchtet wird.

4. Verfahren nach einem der vorhergehenden Ansprüche, **dadurch gekennzeichnet, dass** eine Wirbelschicht oder eine Sprudelschicht aus der Fraktion (10) der Feststoffrückstände (9) in dem Aktivierungsreaktor (104) realisiert wird.

5. Verfahren nach einem der vorhergehenden Ansprüche, **dadurch gekennzeichnet, dass** Mittel zum Trennen verwendet werden, die stromabwärts des Aktivierungsreaktors (104) vorgesehen sind, insbesondere ein Zyklon, um einen Teil der aktivierten Feststoffrückstände zu diesem Reaktor (104) zurückzuschicken.

6. Anlage zum Reinigen von Rauchgasen für den Einsatz des Verfahrens gemäß irgendeinem der vorhergehenden Ansprüche, umfassend:
- Mittel zum Zuführen der zu reinigenden Rauchgase (1);
- einen Gas-Feststoff-Separator (101), in den die Mittel zum Zuführen der zu reinigenden Rauchgase münden;
- Mittel (2) zum Einspeisen eines Neutralisierungsreagens, die in den Separator (101) münden;
- Mittel zum Sammeln einer Fraktion (4) der gereinigten Rauchgase (3);
- Mittel zum Einspeisen einer Fraktion (10) der Feststoffrückstände (9), die aus dem Separator (101) stammen;
- einen Aktivierungsreaktor (104), in den die Mittel zum Sammeln der Fraktion (4) der gereinigten Rauchgase münden, sowie die Mittel zum Einspeisen der Fraktion (10) der Feststoffrückstände; und
- Mittel (12) zum Recyceln mindestens eines Teils der in dem Aktivierungsreaktor (104) aktivierten Feststoffrückstände sowie mindestens eines Teils der aus diesem Reaktor abfließenden Gase, wobei diese Mittel zum Recyceln mit dem Gas-Feststoff-Separator (101) in Verbindung gebracht werden.

7. Anlage zum Reinigen von Rauchgasen nach Anspruch 6, **dadurch gekennzeichnet, dass** der Gas-Feststoff-Separator (101) vom Typ Beutelfilter ist.

8. Anlage zum Reinigen von Rauchgasen nach Anspruch 6 oder 7, **dadurch gekennzeichnet, dass** die Anlage außerdem Mittel zum Erhitzen (102), insbesondere einen Brenner umfasst, in den die Mittel zum Sammeln münden, wobei diese Mittel zum Erhitzen stromaufwärts des Aktivierungsreaktors angeordnet sind (104).

9. Anlage zum Reinigen von Rauchgasen nach irgendeinem der Ansprüche 6 bis 8, **dadurch gekennzeichnet, dass** diese Anlage außerdem Mittel zum Befeuchten (103) umfasst, in die die Mittel zum Sammeln münden, wobei diese Mittel zum Befeuchten stromaufwärts des Aktivierungsreaktors vorgesehen sind (104).

10. Anlage zum Reinigen von Rauchgasen nach irgendeinem der Ansprüche 6 bis 9, **dadurch gekennzeichnet, dass** diese Mittel zum Recyceln (12) in Mitteln zum Trennen, insbesondere einen Zyklon münden, die geeignet sind, einen Teil der zuvor in diesem Reaktor aktivierten Feststoffrückstände in den Aktivierungsreaktor (104) zurückzuschicken.
